# EUROPEAN PATENT SPECIFICATION

(11) **EP 1 013 548 B1**
(45) Date of publication and mention of the grant of the patent: **06.05.2004**
(21) Application number: 99310247.4
(22) Date of filing: 20.12.1999
(51) Int. Cl.: B65B 7/16

(54) **Heat seal apparatus for lens packages**
Heisssiegelvorrichtung für Linsenverpackungen
Dispositif de thermosoudage pour emballages pour lentilles

(30) Priority: 21.12.1998 US 217878
(43) Date of publication of application: 28.06.2000
(73) Proprietor: Johnson & Johnson Vision Care, Inc., Jacksonville, FL 32256 (US)
(72) Inventor: Duncan, Gregory Scott, Jacksonville, FL 32210 (US); Sanka, Ravi S., Jacksonville, FL 32256 (US); Hall, Gary S., Jacksonville, FL 32259 (US)
(74) Representative: Mercer, Christopher Paul

(56) References cited:
- EP-A- 0 582 461
- EP-A- 0 680 880
- WO-A-97/34806
- GB-A- 1 459 094
- US-A- 4 989 393
- US-A- 5 649 410

## Description

### FIELD OF THE INVENTION

The present invention relates to an apparatus for heat sealing containers containing an ophthalmic contact lens to form a sealed package. More specifically, the present invention relates to an apparatus for heat sealing a lidstock to a lens container to form a package by controlling the application of heat and pressure for each lid and container assembly.

### BACKGROUND OF THE INVENTION

In the manufacture of hydrophilic ("soft") ophthalmic contact lenses, it is conventional to package each manufactured lens in a disposable package for containing a single lens and predetermined amount of liquid (generally buffered saline). Typically, the lens and liquid are introduced to a cavity or well in a container. The container is usually formed from a thermoplastic (e.g., molded polypropylene or polystyrene). After the lens and liquid are placed into the container, the container is sealed by applying a foil strip to the top of the container to form a lid and heat sealing the strip to the top of the container to form a package. The heat sealed package containing both the lens and liquid is then subjected to further processing, including for example, sterilization.

Conventional apparatus used for the high speed packaging of contact lenses on an assembly line is designed to permit inspection and packaging of several contact lenses simultaneously. Typically, a plurality (generally 6, 8 or 10) of containers are mounted in a fixed carrier rack having a cavity for receiving each container. A contact lens and liquid are introduced to each container mounted on the rack. The rack of containers is then conveyed to an inspection station where each container is inspected to ensure that a contact lens is present and not defective. The rack then moves onto a platen in a heat sealing station where a preformed sheet of foil stock is positioned over the rack of containers. A heated mandrel is then applied to the rack to apply predetermined heat and pressure for a predetermined time, thereby heat sealing the foil stock to each container and forming sealed packages. As a result, each of the containers are now each heat sealed to the sheet of foil stock and are accordingly joined together to form multi-package arrays. The foil stock is provided with perforations to permit the packages to be separated from each other after further downstream processing and/or shipping.

The packaging approach described above presents several disadvantages. For example, by providing a plurality of lens containers on each rack, the detection and identification of a defective or missing lens on the rack at the inspection station is complicated. A complex matrix tracking system must be employed to identify which container or containers on the rack has failed inspection and track them through the process until they can be removed.

Another problem inherent in processing multiple containers simultaneously in a fixed rack arrangement, is that each container on the rack is subjected to identical heat sealing conditions. Due to variations in the molding process, the molded thermoplastic containers sometimes vary in height. In such an event, a container of non-standard height may be subjected to either too little pressure (if too short) or too much pressure (if too tall) compared to the pressure experienced by a container of standard height. As a result, the heat seal formed on one or more of the array of packages joined together by the perforated foil sheet may be of unacceptable quality. One defective heat seal in the array will require that the entire array of packages be discarded, and, thus, an entire production lot is subject to further testing for heat seal failures which, if present, may require rejecting the entire production lot.

Finally, in the prior art heat sealing apparatus, the sheet of perforated foil stock is positioned over the rack of containers upstream of the heated mandrel station. This arrangement relies on gravity and friction to maintain the lidstock in position until the heat seal is formed. Slight lateral movement of the foil stock causes mis-registration of the stock on the set of containers and could result in a defective set of packages.

The apparatus described above is disclosed in U.S. Patent No. 5,687,541 issued to Martin et al. Other packages and packaging apparatus systems are disclosed in U.S. Patent 5,649,410 issued to Martin et al., U.S. Patent 5,561,970 issued to Edie et al., U.S. Patent 5,094,609 issued to Kindt-Larsen, U.S. Patent 4,691,820 issued to Martinez, U.S. Patent 5,620,087 issued to Martin et al., U.S. Patent 5,749,205 issued to Edwards et al. and U.S. Patent 5,577,367 issued to Abrams et al. In the event of conflict in the meaning or interpretation of the present specification and/or appended claims, the present specification controls.

Documents EP-A-0 680 880 and US-A-4 989 393 disclose sealing machines having either a plurality of platens or a plurality of mandrels. The containers are conveyed step by step either by a pair of grappers or by a belt conveyor.

It will be apparent that there continues to be a need for an apparatus capable of detecting and selectively removing failed containers. In addition, the need exists for a heat sealing apparatus capable of applying a predetermined amount of pressure to each container in a group of containers being sealed simultaneously. Finally, there is a need for a heat sealing apparatus that is capable of maintaining a sheet of lidstock in registration with the set of containers during heat sealing. The present invention addresses these needs.

### SUMMARY OF THE INVENTION

The present invention relates to an apparatus for packaging contact lenses. The apparatus includes a plurality of discrete lens carriers and a plurality of contact lens containers. The carriers are movable within the apparatus. A single one of the containers is mounted on a single one of the carriers.

The present invention also relates to an apparatus for automatically packaging contact lenses that includes a plurality of lens carriers, a plurality of lifts, a plurality of contact lens containers and either a plurality of platens or a plurality of mandrels. One of the containers is mounted on a respective one of the carriers. Each of the platens or each of the mandrels is individually supported by one of the lifts. The lifts apply pressure, within a predetermined range, to each of the containers.

The present invention also relates to an apparatus for automatically packaging contact lenses that includes a plurality of contact lens containers. A heated mandrel is disposed above the plurality of containers. The heated mandrel is moveable between a retracted position above the plurality of containers and an engaged position immediately adjacent to the plurality of containers. A lidstock is selectively movable between a retracted position and an inserted position. The inserted position is between the heated mandrel and the plurality of containers, whereby in the inserted position the lidstock is fixedly held in position at least until the heated mandrel contacts the lidstock while moving to the engaged position.

The present invention also relates to an apparatus for packaging contact lenses that includes a lidstock having indicia printed thereon. The lidstock is fed from a roll under tension. A vision alignment inspection system checks the print quality on the lidstock and simultaneously checks for registration of the lidstock within the apparatus.

In another aspect, the present invention relates to an apparatus for packaging ophthalmic hydrophilic contact lenses transported along a conveyor, each lens contained within a container supported by a carrier. The apparatus includes a conveyor for conveying carriers each supporting a container, each container including a well for containing a contact lens and preferably a heat sealing surface. The apparatus also includes a plurality of platens, each of the platens attached to a lift capable of independently exerting a preset pressure against the mandrel (and the container between the platen and mandrel). Each platen receives a single carrier. Preferably there is one transducer, which generates a pressure signal corresponding to the pressure that operates on the cylinders to assure that it is within prescribed limits. A heated mandrel is disposed above the platens. The mandrel is movable from a disengaged position to an engaged position. A lidstock inserter capable of inserting a lidstock between the mandrel in the disengaged position and the heat sealing surfaces of the containers positioned above the plurality of platens is provided. The inserter preferably holds the lidstock in place until the mandrel contacts the lidstock against the container. In addition, a signal processor is provided, capable of receiving the pressure signal from the transducer, comparing the signal to a set of predetermined values, and marking the array for rejection if the pressure exerted by the lift is outside the predetermined range.

### BRIEF DESCRIPTION OF THE DRAWINGS

The above and still further objects, features and advantages of the present invention will become apparent upon consideration of the following detailed description of a specific embodiment thereof, especially when taken in conjunction with the accompanying drawings wherein like reference numerals in the various figures are utilized to designate like components, and wherein:
Figure 1 is a side elevation view of the heat sealing apparatus according to the present invention;
Figure 2 is a front elevation view of the heat sealing apparatus illustrated in Figure 1;
Figure 3 is a perspective view of a contact lens container;
Figure 4 is a perspective view of a contact lens carrier with a contact lens container received thereon;
Figure 5 is a side view of another embodiment of the present invention;
Figure 6 is a schematic diagram of the pneumatic system of the preferred heat sealing apparatus; and
Figure 7 is a side view of the movement of the lidstock prior to the heat seal apparatus.

### DETAILED DESCRIPTION OF THE PREFERRED EMBODIMENTS

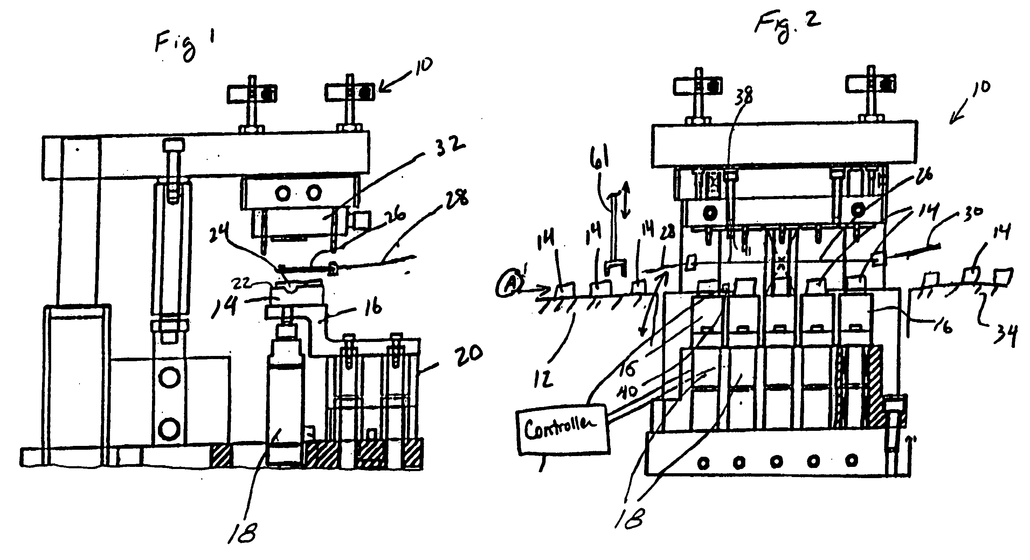

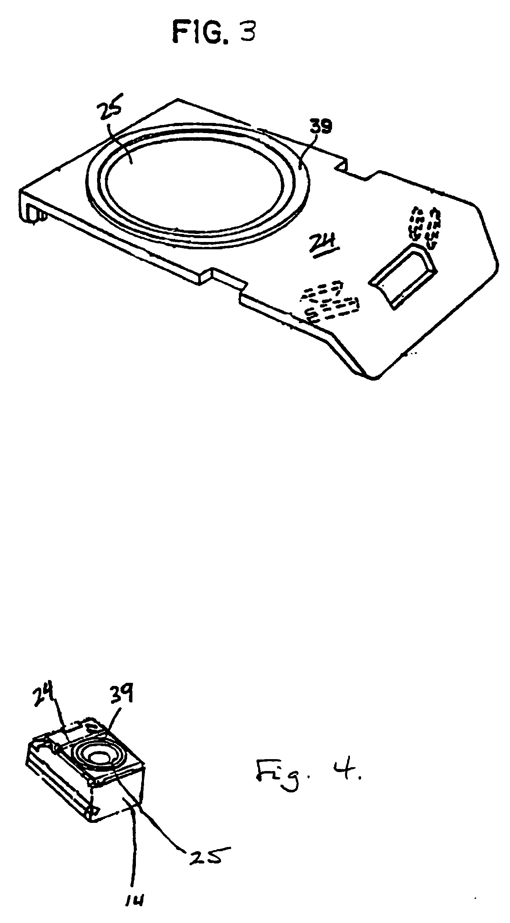

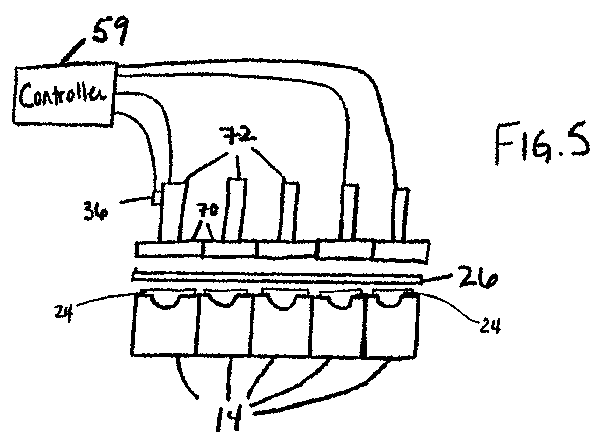

Referring now to Figures 1 and 2, side and front elevation views of a heat seal apparatus 10 for sealing a lidstock onto a container to form a sealed contact lens package are illustrated. The apparatus includes an upstream conveyor 12 capable of conveying a plurality of individual lens carriers 14 (FIG. 4), in the direction indicated by arrow A in Figure 2, into the heat seal apparatus 10.

As illustrated in Figure 2, in the heat seal apparatus 10, each individual carrier 14 is positioned above a discrete support platen 16. Each platen 16 is supported by a lift, e.g., a hydraulic or pneumatic (i.e., fluid) cylinder 18 which is operative to vertically displace the respective platen and by a bearing block 20.

Each individual lens carrier 14 supports, on its upper surface 22, a lens container 24, which contains a contact lens in a cup-shaped recess or well 25. The containers can be a portion of the mold, e.g., the front cure mold and/or the bottom half of a contact lens package, which is conventionally referred to as the bowl. Preferably, the container is a bowl. Referring now to Figure 3, container 24 includes a sealing flange 39, which is disposed about cup-shaped recess 25. The individual lens carriers 14 are incrementally moved into position in the heat sealing assembly such that one lens carrier 14 is placed upon each of the platens 16. As illustrated in Figure 2, the heat seal assembly includes, in one illustrative embodiment, five platens which each receive a single lens carrier holding a container. However, in the currently preferred exemplary embodiment, the heat seal assembly includes six platens. Once the set of lens carriers are in position, with each carrier supporting a container 24 thereupon, a lidstock sheet 26 is moved into position between a heated mandrel 32 of the heat seal apparatus and the containers 24. Lidstock 26 is preferably in the form of a foil lid stock, which is preferably pre-perforated in a conventional manner at a location corresponding to a location between each individual lens carrier 14. The foil sheet is typically a laminate of aluminum foil and a thermoplastic film, such as a polyethylene. Lidstock 26 is preferably held by a foil maneuvering mechanism which includes a pair of gripping fingers 28, 30. The fingers selectively move lidstock 26 from a retracted position (not shown) to the inserted position (see Figures 1 and 2). Preferably, the lidstock is held in position over the containers at least until the heated mandrel contacts the lidstock to the surface of the container at which time the fingers let go of the lidstock and return to the retracted position. In another embodiment, the fingers can hold the lidstock in place until the heat sealing step is complete. The heated mandrel 32 is selectively movable from an upper, non-engaging position, as illustrated in Figures 1 and 2, to a lower engaged position, thereby applying heat and pressure to a predetermined portion of the lidstock 26 positioned over the container for a predetermined time to create a heat seal and form a sealed package. More specifically, lidstock 26 is heat sealed to the annular flanges 39 of each of the respective containers 24. Thereafter, the heated mandrel 32 is raised back up to the upper, non-engaging position. The individual lens carriers 14, which each now carry a sealed package (i.e., a container 24 heat sealed to foil lidstock 26) joined by the foil sheet to the adjoining packages to form a set of packages, are next advanced to a downstream conveyor 34 for further processing, in a manner which is known to those skilled in the art. In the preferred mode, six (6) containers are sealed in each step, with two lidstock strips covering three packages each.

Each cylinder 18 is in fluid communication with a one or more pressure transducers 36 to measure the pressure that is applied by the heated mandrel 32 against the container when mandrel 32 is moved to the lower, engaged position. The heat seal apparatus 10 further includes a controller 59 electrically connected to the one or more pressure transducers and to the individual cylinders, and is programmed with the acceptable predetermined range for the pressures to be exerted in forming the heat seal. The controller preferably comprises a processor or computer programmed to receive the electrical signals from the one or more pressure transducers, determines the pressure applied to the respective packages 24, and, if necessary, controls one or more of the cylinders 18 to increase or decrease the pressure applied to that container. Preferably, the pressure applied by the heated mandrel 32 against the containers 24 is within the predetermined range. The range can be determined by those skilled in the art depending on the material used for package 24, lidstock 26 and their respective thicknesses to ensure that a proper seal is achieved. Because of the tolerances in the thickness of the sealing flange 39 on the container 24 and the thickness of the lidstock 26, by applying the heated mandrel to an individually supported lens carrier at a pressure maintained within the predetermined range, the present invention ensures that the proper pressure is applied to each container so that lidstock 26 is properly sealed to container 24 in the set. Thus, in the event one of the pressure transducers senses a pressure out of the predetermined range, the corresponding cylinder is controlled to either rise or descend to increase or decrease respectively, the pressure applied to that container to ensure a proper heat seal.

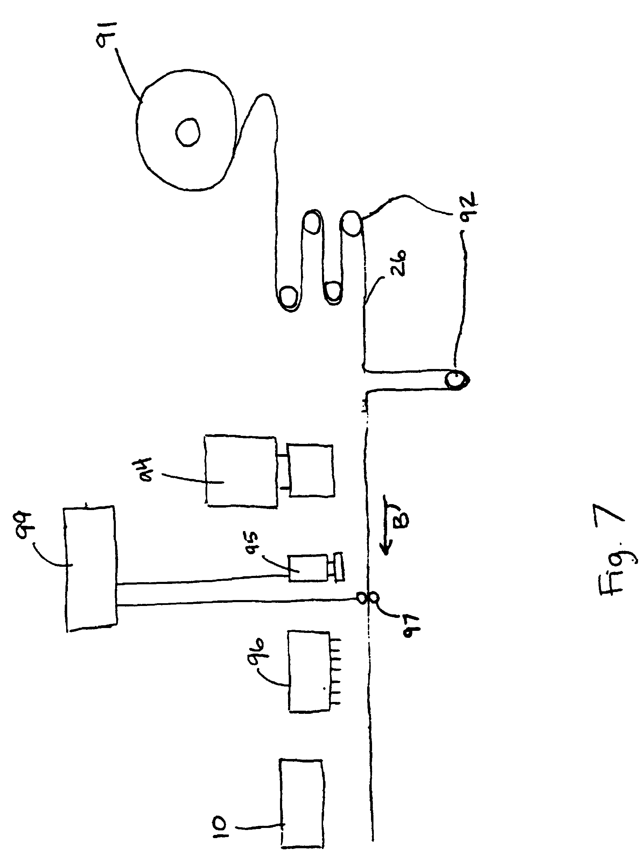

Referring now to Figure 6, in a currently preferred exemplary embodiment, one pressure transducer 80 is used to measure the pressure that is applied to each cylinder or lift 18. Each cylinder 18 is adjustable between an up position and a down position dependent upon the position of a three way valve 84. Three way valve 84 receives fluid pressure from a conventional source (not shown) via source conduit 86. Valve 84 connects fluid line 86 with either cylinder up conduit line 82 or with cylinder down conduit line 88. It is noted that the pressure transducer 80 is tapped into pressure line 82 to determine the pressure applied by all cylinders 18 when they are in the up position. An alarm (not shown) is activated if the detected pressure is not within a predetermined range. If the alarm is activated the array of packages, which were in the heat sealer, are tracked for discard by the control system.

Lidstock 26 can be provided with a lid registration mark 38, which can be sensed by an optical sensor assembly within the heat cylinder assembly to ensure that the lidstock 26 is properly positioned within the heat seal assembly. Registration mark 38 can be an aperture or transparent portion of the lidstock, such that an optical signal from an optical transmitter 41 of the sensor assembly is received by an optical detector 40 only when the aperture is aligned with the optical signal path defined between the transmitter and receiver. In place of the optical sensor assembly within the heat seal apparatus 10, registration of the lidstock may be done elsewhere, and the gripping arms 28 and 30 of the lidstock maneuvering mechanism may be arranged to reliably maneuver the lidstock to a predetermined location in proper registration with the platen 16 and, thus, with the carriers 14. Because the lidstock is preferably held during the heat seal step the alignment preferably does not need to be checked after sealing.

In the preferred embodiment, in the steps before the lidstock is placed over the containers in the heat seal apparatus, the lidstock (which preferably has most of the graphics pre-printed on it) has some variable product information printed on it, e.g., the power, lot and expiration date of the product and the lidstock is cut and perforated into strips according to the number of containers to be heat-sealed into an array. The printing on the lidstock can be done by any known method, including laser printing or thermal printing, preferably by laser printing. The preprinted graphics on the lidstock preferably provide areas in which this information is to printed, e.g., blank colored boxes. In the preferred embodiment, shown in Fig. 7, a strip of lidstock 26 is fed off a roll 91 under constant tension through lidstock buffers 92 in the direction shown by arrow B to the printing system 94, and to the cutting or cutting and perforation system 96 which are located in a line. Preferably, between these two operations is located a vision system 95 which uses a portion of the graphics on the lidstock 26 to check the registration of the lidstock. If, when the strip of lidstock 26 is fed into the printing system 94 and cutting and perforation system 96, the portion of the graphics is not in its proper location, the vision system 95 communicates to the control system 99 for the process that the lidstock is not in the correct location and the control system 99 instructs the lidstock feed rollers 97 to adjust the position of the lidstock either in the plus or minus direction. By the use of the vision system 95 the lidstock 26 is continuously checked and automatically realigned. The vision system 95 can be located before and/or after the printing system 94, and/or within the cutting and perforation system 96, and/or in the heat-seal apparatus 10. However, in the preferred embodiment, there is only one vision system 95, e.g., an optical character verification system with location capability, and it checks the laser printing quality at the same time it checks the registration; therefore, it is preferably located after the printing system 94. By locating the printing system 94 and the cutting and perforation system 96 in a line in which the lidstock 26 is taut between them and under constant tension, the registration of the lidstock 26 by the vision system 95 maintains registration in both systems. Further, in the preferred embodiment, by carefully controlling the lidstock 26 during the cutting and printing steps and by holding the lidstock until the mandrel 32 contacts the lidstock 26 in the heat-sealing apparatus 10, checking the registration of the lidstock within or after the heat-sealing apparatus 10 is not necessary, and in the preferred embodiment is not done.

Further, in the upstream conveyor 12, a conventional inspection system may be used to ensure that a proper or non-defective lens has been placed within each container 24. In the preferred embodiment, the detection system described in commonly assigned U.S. Patent Application Serial No. 09/187,579 filed November 5, 1998, entitled "Missing Lens Detection System and Method", is upstream of the heat seal apparatus. If either a conventional inspection system or the preferred detection system is used, if an improper or defective lens has been placed within container 24, or, for example, if no lens has been placed within container 24, the carrier 14 supporting the container can be removed from the assembly line (i.e., from conveyor 12) downstream of the inspection station by a discarder arm 61 or the like, which is preferably controlled by the computer for the process acting on information from the detection system or inspection system. An acceptable lens-containing container on a carrier can then be automatically moved into the empty position left by the removed carrier before the individual lens carriers 14 are moved into position before or in the heat seal assembly 10. A device for automatically inspecting contact lenses is described in U.S. Patent No. 5,687,541 to Martin et al., incorporated herein by reference.

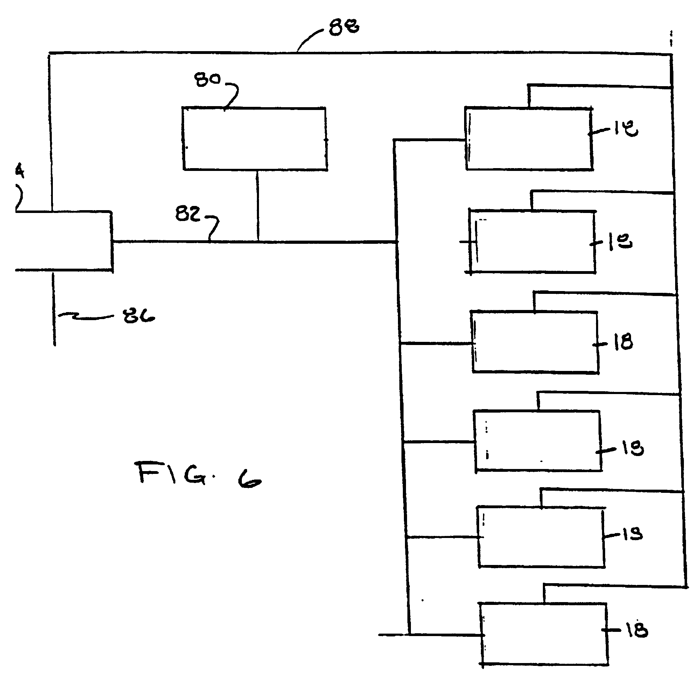

In another embodiment, the heated mandrel 32 may comprise plural individually actuated dies 70 (Fig. 5) controlled by individual die cylinders 72, each of which individually applies pressure to portions of the lidstock 26 and to a corresponding one of the containers 24 housed in the carriers 14. In this embodiment, the cylinders 18 engaged to the corresponding platens 16 are replaced by the die cylinders 72, and the platen 16 may be a conventional, single base supporting all of the carriers or a single carrier holding multiple containers to be heat sealed. The pressure in the die cylinders can be monitored by one or more pressure transducers 36 as described above in connection with Fig. 2 or Fig. 6 and the controller 59 can be responsive to receipt of electrical signals from the respective transducers to control the individual die cylinders 72 to maintain the pressure applied to each of the packages within the predetermined range, or if the pressure is outside a set range the arrays can be tracked for discard. Again, it is preferable to hold the lidstock in place over the containers until the mandrel is moved to the engaging position causing the lidstock to contact the containers.

## Claims

1. An apparatus for packaging contact lenses in a plurality of contact lens containers (24), each container having a well (25), a contact lens within said well and a heat sealing surface (39), and with a lidstock (26) heat sealed thereon to form a set of packages, said apparatus comprising:
a plurality of lifts (18);
a plurality of platens (16) located adjacent to one another, each of said platens being individually supported by one of said lifts;
a plurality of discrete carriers (14), said carriers being movable within said apparatus onto said plurality of said platens, such that each of said carriers is mounted on a respective one of said platens , a single one of said containers being mounted on a single one of said carriers;
a lidstock maneuvering system for placing lidstock (26) over a plurality of said containers; and
a mandrel (32) disposed above said platens (16);
wherein pressure is simultaneously applied to said lidstock and said flanges of said containers by said mandrel and said platens to adhere said lid stock to said containers.

2. The apparatus according to claim 1, wherein each carrier (14) has a cavity, each said well (25) of said container being received in said cavity of said carrier.

3. The apparatus according to claim 1, wherein said lidstock (26) has a thickness and said container (24) has a thickness, and further wherein said mandrel (32) is selectively moveable between a retracted upper position and an engaged lower position to seal said lidstock to said containers, and wherein in said lower position, a pressure applied by said mandrel against each of said platens (16) is maintained within a predetermined range by the respective lifts (18), thereby compensating for tolerance differences in the thickness of said containers and the thickness of said lidstock to ensure that an adequate seal is formed between said lidstock and each of said containers.

4. The apparatus according to claim 3, further comprising a pressure transducer (36) being connected to said lifts, and further wherein said lifts (18) apply pressure to said containers within a predetermined range, as determined by said pressure transducer.

5. An apparatus for packaging contact lenses according to claim 1, modified in that said apparatus comprises:
a platen capable of supporting a plurality of carriers (14);
a plurality of discrete carriers, said carriers being movable within said apparatus onto said platen so that said carriers are located adjacent to one another; and
a plurality of mandrels disposed above said platen; each of said mandrels being individually supported by one of said lifts and such that each of said carriers is located below each of said mandels.

6. The apparatus according to claim 5, wherein said lidstock has a thickness and said container (24) has a thickness, and further wherein said mandrels are selectively moveable between a retracted upper position and an engaged lower position to seal said lidstock to said containers, and wherein in said lower position, a pressure applied by said mandrels against said platen is maintained within a predetermined range by the respective lifts, thereby compensating for tolerance differences in the thickness of said containers and the thickness of said lidstock to ensure that an adequate seal is formed between said lidstock and each of said containers.

7. The apparatus according to claim 5, further comprising a pressure transducer (36) being connected to said lifts, and further wherein said lifts apply pressure to said containers within a predetermined range, as determined by said pressure transducer.

8. The apparatus according to claim 1 or 5 wherein said mandrel is heated.

9. The apparatus of claim 1 or 5, wherein said lidstock maneuvering system further comprises:
a vision alignment inspection system (95) having means for checking the print quality on said lidstock (26) and for simultaneously checking for registration of said lidstock within said apparatus based on the location of said print on said lidstock relative to the area on said lidstock to receive the print

10. The apparatus of claim 9, wherein said lidstock maneuvering system further comprises a printing system (94) and a cutting system (96), wherein said lidstock (26) is fed from a roll (91) under tension into said printing system and said cutting system, and wherein said vision alignment inspection system (95) is located after said printing system or is located between said printing system and said cutting system.

11. The apparatus of claim 9, further comprising a heat seal apparatus, wherein said lidstock (26) is mechanically controlled after said vision alignment inspection system (95) to prevent misregistration of said lidstock in said heat seal apparatus.

12. The apparatus of claim 3, wherein said lidstock (26) is held in position by said lidstock maneuvering system over said containers (24) until said mandrel (32) contacts said lidstock in said engaged lower position.

13. The apparatus of claim 1, wherein said apparatus further comprises:
said mandrel (32) further comprising a plurality of dies (70) each having a die cylinder (72);
said dies (70) disposed above each of said carriers (14);
wherein said cylinders apply pressure, within a predetermined range, to each of said dies.

14. The apparatus of claims 5 and 10, wherein said cutting system (96) is located after said printing system (95).

15. The apparatus of claim 6, wherein said lidstock (26) is held in position by said lidstock maneuvering system between said mandrels and said platen until said mandrel contacts said lidstock.

## Patentansprüche

1. Vorrichtung zum Verpacken von Kontaktlinsen in einer Vielzahl von Kontaktlinsenbehältem (24), die jeweils eine Schale (25), eine Kontaktlinse innerhalb der Schale und eine Heißsiegeloberfläche (39) aufweisen, und mit einer Abdeckung (26), die darauf heißgesiegelt ist, um einen Satz von Verpackungen zu bilden, wobei die Vorrichtung umfasst:
eine Vielzahl von Hebeeinrichtungen (18);
eine Vielzahl von Auflageplatten (16), die benachbart zueinander angeordnet sind und jeweils einzeln von einer der Hebeeinrichtungen gehalten werden;
eine Vielzahl von voneinander getrennten Halterungen (14), die innerhalb der Vorrichtung auf der Vielzahl von Aufnahmeplatten bewegbar sind, so dass jede Halterung auf einer entsprechenden, einzelnen Auflageplatte befestigt ist, wobei jeder einzelne Behälter an einer einzelnen Halterung gehalten ist;
eine Abdeckungsmanövriereinrichtung zum Plazieren der Abdeckung (26) über eine Vielzahl der Behälter; und
einen Drehstift (32), der oberhalb der Auflageplatten (16) angeordnet ist;
wobei Druck gleichzeitig auf die Abdeckung und auf die Flansche der Behälter durch den Drehstift und die Auflageplatten ausgeübt wird, um die Abdeckung an den Behältern zu befestigen.

2. Vorrichtung nach Anspruch 1, **dadurch gekennzeichnet, dass** jede Halterung (14) einen Hohlraum aufweist, wobei jede Schale (25) des Behälters in dem Hohlraum der Halterung aufgenommen ist.

3. Vorrichtung nach Anspruch 1, **dadurch gekennzeichnet, dass** die Abdeckung (26) und der Behälter (24) jeweils eine Dicke aufweisen und dass der Drehstift (32) selektiv bewegbar zwischen einer zurückgezogenen oberen Position und einer eingerasteten unteren Position ist, um die Abdeckung an die Behälter zu siegeln, und dass in der unteren Position ein Druck, der durch den Drehstift auf jede Auflageplatte (16) ausgeübt wird, innerhalb eines vorbestimmten Bereichs durch die entsprechenden Hebeeinrichtungen (18) aufrecht erhalten wird, wodurch Toleranzdifferenzen in der Dicke der Behälter und in der Dicke der Abdeckung kompensiert werden, um zu gewährleisten, dass eine ausreichende Versiegelung zwischen der Abdeckung und jedem Behälter ausgebildet wird.

4. Vorrichtung nach Anspruch 3, **dadurch gekennzeichnet, dass** die Vorrichtung außerdem einen Druckmessfühler (36) aufweist, der mit den Hebeeinrichtungen verbunden ist, wobei die Hebeeinrichtungen (18) Druck auf die Behälter innerhalb eines vorbestimmten Bereichs ausüben, wie durch den Druckmessfiihler bestimmt.

5. Vorrichtung zum Verpacken von Kontaktlinsen nach Anspruch 1, **dadurch gekennzeichnet, dass** die Vorrichtung aufweist:
eine Auflageplatte, die eine Vielzahl von Halterungen (14) halten kann;
eine Vielzahl von voneinander getrennten Halterungen, die innerhalb der Vorrichtung auf der Auflageplatte bewegbar sind, so dass die Halterungen benachbart zueinander angeordnet sind; und
eine Vielzahl von Drehstiften, die oberhalb der Auflageplatte angeordnet sind; wobei jeder Drehstift einzeln durch eine der Hebeeinrichtungen gehalten ist, so dass jede Halterung unterhalb von jedem Drehstift angeordnet ist.

6. Vorrichtung nach Anspruch 5, **dadurch gekennzeichnet, dass** die Abdeckung und der Behälter (24) jeweils eine Dicke aufweisen und dass die Drehstifte selektiv bewegbar zwischen einer zurückgezogenen oberen Position und einer eingerasteten unteren Position sind, um die Abdeckung an die Behälter zu siegeln, und dass in der unteren Position ein Druck, der durch die Drehstifte auf die Auflageplatte ausgeübt wird, innerhalb eines vorbestimmten Bereichs durch die entsprechenden Hebeeinrichtungen aufrecht erhalten wird, wodurch Toleranzdifferenzen in der Dicke der Behälter und in der Dicke der Abdeckung kompensiert werden, um zu gewährleisten, dass eine ausreichende Versiegelung zwischen der Abdeckung und den Behältern ausgebildet wird.

7. Vorrichtung nach Anspruch 5, **dadurch gekennzeichnet, dass** die Vorrichtung einen Druckmessfühler (36) aufweist, der mit den Hebeeinrichtungen verbunden ist, und dass die Hebeeinrichtungen Druck auf die Behälter innerhalb eines vorbestimmten Bereichs ausüben, wie durch den Druckmessfühler bestimmt.

8. Vorrichtung nach einem der Ansprüche 1 oder 5, **dadurch gekennzeichnet, dass** der Drehstift beheizt ist.

9. Vorrichtung nach einem der Ansprüche 1 oder 5, **dadurch gekennzeichnet, dass** die Abdeckungsmanövriereinrichtung weiterhin umfasst:
eine Bildabgleich-Prüfeinrichtung (95) mit Mitteln zum Überprüfen der Druckqualität auf der Abdeckung (26) und zum gleichzeitigen Prüfen der Lagegenauigkeit der Abdeckung innerhalb der Vorrichtung basierend auf dem Ort des Druckes auf der Abdeckung relativ zu dem Bereich auf der Abdeckung, der für die Aufnahme des Druckes vorgesehen ist.

10. Vorrichtung nach Anspruch 9, **dadurch gekennzeichnet, dass** die Abdeckungsmanövriereinrichtung weiterhin umfasst:
eine Druckeinrichtung (94) und eine Schneideinrichtung (96), wobei die Abdeckung (26) von einer Rolle (91) unter Spannung in die Druckeinrichtung und die Schneideinrichtung eingeführt wird und die Bildabgleich-Prüfeinrichtung (95) hinter der Druckeinrichtung oder zwischen der Druckeinrichtung und der Schneideinrichtung angeordnet ist.

11. Vorrichtung nach Anspruch 9, **dadurch gekennzeichnet, dass** die Vorrichtung außerdem eine Heißversiegelungsvorrichtung aufweist, wobei die Abdeckung (26) nach der Bildabgleich-Prüfeinrichtung (95) mechanisch kontrolliert wird, um eine Fehllage der Abdekkung in der Heißversiegelungsvorrichtung zu verhindern.

12. Vorrichtung nach Anspruch 3, **dadurch gekennzeichnet, dass** die Abdeckung (26) durch die Abdeckungsmanövriereinrichtung in einer Position oberhalb der Behälter (24) gehalten wird, bis der Drehstift (32) die Abdeckung in der eingerasteten unteren Position berührt.

13. Vorrichtung nach Anspruch 1, **dadurch gekennzeichnet, dass** die Vorrichtung außerdem umfasst:
den Drehstift (32), der außerdem eine Vielzahl von Stempeln (70) aufweist, die jeweils einen Stempelzylinder (72) aufweisen;
die Stempel (70), die oberhalb jeder Halterung (14) angeordnet sind;
wobei die Zylinder Druck innerhalb eines vorbestimmten Bereichs auf jeden Stempel ausüben.

14. Vorrichtung nach Anspruch 5 und 10, **dadurch gekennzeichnet, dass** die Schneideinrichtung (96) hinter der Druckeinrichtung (95) angeordnet ist.

15. Vorrichtung nach Anspruch 6, **dadurch gekennzeichnet, dass** die Abdeckung (26) durch die Abdeckungsmanövriereinrichtung in einer Position zwischen den Drehstiften und der Auflageplatte gehalten wird, bis der Drehstift die Abdeckung berührt.

## Revendications

1. Appareil pour emballer des lentilles de contact dans une pluralité de récipients de lentilles de contact (24), chaque récipient présentant un godet (25), une lentille de contact à l'intérieur dudit godet et une surface de thermoscellage (39) et avec un couvercle (26) thermoscellé dessus pour former un ensemble d'emballages, ledit appareil comprenant :
■ une pluralité de soulévateurs (18) ;
■ une pluralité de platines ((16) situées adjacentes les unes aux autres, chacun desdites platines étant individuellement supportée par un desdits soulévateurs ;
■ une pluralité d'entraîneurs discrets (14), lesdits entraîneurs étant mobiles à l'intérieur dudit appareil sur ladite pluralité desdites platines, de telle manière que chacun desdits entraîneurs soit monté respectivement sur une desdites platines, un seul desdits récipient étant monté sur un seul desdits entraîneurs ;
■ un système de manoeuvre de couvercle pour placer le couvercle (26) sur une pluralité desdits récipients ; et
■ un mandrin (32) disposé au-dessus desdites platines (16) ;
■ dans lequel une pression est simultanément appliquée audit couvercle et auxdits bords desdits récipients par ledit mandrin et lesdites platines pour faire adhérer ledit couvercle auxdits récipients.

2. Appareil selon la revendication 1, dans lequel chaque entraîneur (14) présente une cavité, chacun desdits godets (25) dudit récipient étant reçu dans ladite cavité dudit entraîneur.

3. Appareil selon la revendication 1, dans lequel ledit couvercle (26) présente une épaisseur et ledit récipient (24) présente une épaisseur et en outre dans lequel ledit mandrin (32) est mobile de manière sélective entre une position supérieure rétractée et une position inférieure de mise en prise pour sceller ledit couvercle auxdits récipients, et dans lequel dans ladite position inférieure, une pression appliquée par ledit mandrin contre chacune desdites platines (16) est maintenue dans une gamme prédéterminée par les soulévateurs respectifs (18), compensant ainsi les différences de tolérance dans l'épaisseur desdits récipients et l'épaisseur dudit couvercle afin de s'assurer qu'un joint adéquat est formé entre ledit couvercle et chacun desdits récipients.

4. Appareil selon la revendication 3, comprenant en outre un transducteur de pression (36) étant relié auxdits soulévateurs, et dans lequel en outre lesdits soulévateurs (18) appliquent une pression auxdits récipients dans une gamme prédéterminée, tel que déterminé par ledit transducteur de pression.

5. Appareil pour emballer des lentilles de contact selon la revendication 1, modifié en ce que ledit appareil comprend :
■ une platine capable de supporter une pluralité d'entraîneurs (14) ;
■ une pluralité d'entraîneurs discrets, lesdits entraîneurs étant mobiles à l'intérieur dudit appareil sur ladite platine afin que lesdits entraîneurs soient adjacents les uns aux autres ; et
■ une pluralité de mandrins disposés au-dessus de ladite platine ; chacun desdits mandrins étant supporté individuellement par un desdits soulévateurs et de telle manière que chacun desdits entraîneurs soit situé en dessous de chacun desdits mandrins.

6. Appareil selon la revendication 5, dans lequel ledit couvercle présente une épaisseur et ledit récipient présente une épaisseur et dans lequel en outre lesdits mandrins sont mobiles de manière sélective entre une position supérieure rétractée et une position inférieure de mise en prise pour sceller ledit couvercle auxdits récipients, et dans lequel dans ladite position inférieure, une pression appliquée par ledit mandrin contre ladite platine est maintenue dans une gamme prédéterminée par les soulévateurs respectifs, compensant ainsi les différences de tolérance dans l'épaisseur desdits récipients et l'épaisseur dudit couvercle afin de s'assurer qu'un joint adéquat est formé entre ledit couvercle et chacun desdits récipients.

7. Appareil selon la revendication 5, comprenant en outre un transducteur de pression (36) étant relié auxdits soulévateurs, et dans lequel en outre lesdits soulévateurs appliquent une pression auxdits récipients dans une gamme prédéterminée, tel que déterminé par ledit transducteur de pression.

8. Appareil selon la revendication 1 ou 5, dans lequel ledit mandrin est chauffé.

9. Appareil selon la revendication 1 ou 5, dans lequel ledit système de manoeuvre de couvercle comprend en outre : un système d'inspection d'alignement de vision (95) présentant des moyens pour vérifier la qualité de l'impression sur ledit couvercle (26) et pour vérifier simultanément le positionnement dudit couvercle à l'intérieur dudit appareil sur la base de l'emplacement de ladite impression sur ledit couvercle par rapport à la zone de réception de l'impression dudit couvercle.

10. Appareil selon la revendication 9, dans lequel ledit système de manoeuvre de couvercle comprend en outre un système d'impression (94) et un système de découpe (96), dans lequel ledit couvercle (26) est alimenté depuis un rouleau (91) sous tension à l'intérieur dudit système d'impression et dudit système de découpe et dans lequel ledit système d'inspection d'alignement de vision (95) est situé après ledit système d'impression ou est situé entre ledit système d'impression et ledit système de découpe.

11. Appareil selon la revendication 9, comprenant en outre un appareil de thermoscellage, dans lequel le couvercle (26) est commandé mécaniquement après ledit système d'inspection d'alignement de vision (95) pour empêcher le défaut de cadrage dudit couvercle dans ledit appareil de thermoscellage.

12. Appareil selon la revendication 3, dans lequel ledit couvercle (26) est maintenu en position par ledit système de manoeuvre de couvercle sur lesdits récipients (24) jusqu'à ce que ledit mandrin (32) soit en contact avec ledit couvercle dans ladite position inférieure de mise en prise.

13. Appareil selon la revendication 1, dans lequel ledit appareil comprend en outre :
■ ledit mandrin (32) comprenant en outre une pluralité de matrice (70), chacune ayant un cylindre de découpe (72) ;
■ lesdites matrices (70) disposées au-dessus de chacun desdits entraîneurs (14) ;
■ dans lequel lesdits cylindres appliquent une pression dans une gamme prédéterminée à chacune desdites matrices.

14. Appareil selon les revendications 5 et 10, dans lequel ledit système de découpe (96) est situé après ledit système d'impression.

15. Appareil selon la revendication 6, dans lequel ledit couvercle (26) est maintenu en position par ledit système de manoeuvre de couvercle entre lesdits mandrins et ladite platine jusqu'à ce que ledit mandrin entre en contact avec ledit couvercle.
